# EUROPEAN PATENT SPECIFICATION

(11) **EP 3 412 635 B1**
(45) Date of publication and mention of the grant of the patent: **14.04.2021**
(21) Application number: 17174934.4
(22) Date of filing: 08.06.2017
(51) Int. Cl.: C02F 1/04, C02F 3/02, C02F 3/30, F23G 7/00, C02F 1/24, C02F 1/40, C02F 1/66, C02F 3/08, C02F 3/12, C02F 101/30, C02F 101/34, C02F 103/36

(54) **WASTEWATER TREATMENT METHOD**
ABWASSERBEHANDLUNGSVERFAHREN
MÉTHODE DE TRAITEMENT DES EAUX USÉES

(43) Date of publication of application: 12.12.2018
(73) Proprietor: Lyondell Chemie Nederland B.V., 3013 AA Rotterdam (NL)
(72) Inventor: HOEK, Walterus Hendrikus Bartholomeus, 3199 KB Maasvlakte-Rotterdam (NL)
(74) Representative: LyondellBasell

(56) References cited:
- WO-A1-2017/067887
- US-A- 3 956 126
- US-A1- 2011 121 228
- US-B1- 6 500 310

## Description

### TECHNICAL FIELD

This invention relates to a method wastewater produced in the co-production of propylene oxide and styrene monomer.

### BACKGROUND

The co-production of propylene oxide and styrene monomer, also known as the 'POSM', 'SMPO', or 'MSPO' process, involves the oxidation of ethyl benzene to form ethyl benzene hydroperoxide, the catalytic reaction of the hydroperoxide with propylene to form propylene oxide and methylbenzyl alcohol (MBA; also known as methyl phenyl carbinol or 1-phenyl ethanol), and the dehydration of the MBA to produce styrene monomer. In the POSM process, various distillation steps are employed in order to separate unreacted reagents, as well as various product streams, and one or more caustic treatment steps may be employed in order to reduce the acidic characteristics of various streams. Various waste streams may be produced in the POSM process, including wastewater streams, such as caustic wash wastewater streams and MBA dehydration water streams, and heavy residue streams that may be useful as a low-grade fuel.

The patent application WO2017/067887 discloses the treatment of a wastewater stream originating from a POSM process. A wastewater stream that can be purified by biotreatment or incineration is a treated waste water stream containing water and a variety of non-stripped organic components, such as organic salts.

The application US2011/121228 discloses a treatment for waste water originating from a POSM plant, wherein the alkaline aqueous stream with high organic content is acidified and separated into an aqueous fraction and an organic fraction. The aqueous fraction can be biotreated and the organic fraction can be used as fuel in a co-generation plant.

US 6 500 310 discloses a distillation method for treating the wastewater generated by a POSM process. The hydrocarbon-rich stream obtained from distillation can be used as fuel in an incinerator.

An on ongoing need exists for systems and methods for handling waste streams produced in the POSM process.

### SUMMARY

The invention relates to a method for treating wastewaters from a process of co-production of propylene oxide and styrene monomer (POSM process), which involves the oxidation of ethylbenzene to form ethyl benzene hydroperoxide, the catalytic reaction of the hydroperoxide with propylene to form propylene oxide and methylbenzyl alcohol and the dehydration of the methylbenzyl alcohol to produce styrene monomer, whereby various wastewaters are generated including caustic wash wastewater and methylbenzyl alcohol dehydration wastewater, the method comprising:
- producing, via an incinerator/boiler combination (200A), a flue gas and steam from an incinerator feed comprising caustic wash wastewater (W3) from the POSM process;
- anaerobically biotreating in a anaerobic biotreatment apparatus (300A) an anaerobic biotreatment feed comprising methylbenzyl alcohol dehydration wastewater (W1) from the POSM process so as to produce an anaerobically biotreated product (PW1); and
- aerobically biotreating in an aerobic biotreatment apparatus (300B) an aerobic biotreatment feed comprising caustic wash wastewater (W2) from the POSM process and the anaerobically biotreated product (PW1), thereby producing the treated water (PW2)..

While multiple embodiments are disclosed, still other embodiments will become apparent to those skilled in the art from the following detailed description. As will be apparent, certain embodiments, as disclosed herein, are capable of modifications in various aspects, all without departing from the scope of the claims as presented herein. Accordingly, the detailed description hereinbelow is to be regarded as illustrative in nature and not restrictive.

### BRIEF DESCRIPTION OF THE DRAWINGS

The following figures illustrate embodiments of the subject matter disclosed herein. The claimed subject matter may be understood by reference to the following description taken in conjunction with the accompanying figure, in which like reference numerals identify like elements, and in which:
FIG. 1 is a schematic of a wastewater treatment system according to an embodiment of this disclosure;
FIG. 2 is a schematic of a wastewater treatment system according to another embodiment of this disclosure; and
FIG. 3 is a schematic of a POSM system, according to this disclosure, from which wastewater to be treated may be produced or obtained.

### DETAILED DESCRIPTION

### Overview

The invention relates to methods for treatings wastewaters, as defined in claim 1, and in the dependent claims 2-7 for the preferred embodiments of the invention. The disclosure also describes systems that can be used to implement the methods of the invention. The treated wastewaters include caustic wastewater (CWW) produced in a process for the co-production of propylene oxide and styrene monomer (also referred to herein as a 'POSM process'). As utilized herein the term 'caustic', when referring to wastewater, indicates a watery purge from a caustic wash system that purges the used spent caustic, and/or may contain excess caustic, organic caustic salts and/or dissolved and/or entrained organics from the process stream that was treated by the caustic wash system. Via the disclosed system and method, incineration utilizing dry incineration technology may be employed to incinerate at least a portion of the wastewater from a POSM process without the co-production of a water stream that needs disposal, as occurs with wet incineration (e.g., submerged combustion) technology. For example, incineration may be utilized to treat a first portion *(e.g.,* 60 volume percent) of the total wastewater to be treated, while biotreatment may be utilized to treat a second portion or the remainder (e.g., 40 volume percent) of the total wastewater to be treated. The biotreatment comprises anaerobic biotreatment in combination with, aerobic biotreatment, optionally in combination with pretreatments that enhance the biodegradability of wastewater. The treated wastewaters comprise caustic wash wastewater produced in a caustic wash step of a POSM process; dehydration water produced during an MBA dehydration step of a POSM process; and optionally: other POSM wastewater; and/or sewer water; and/or rainwater; and/or sanitary water. A system of this disclosure may thus, in embodiments, further comprise a POSM system operable to produce the wastewater to be treated.

### Wastewater Treatment System

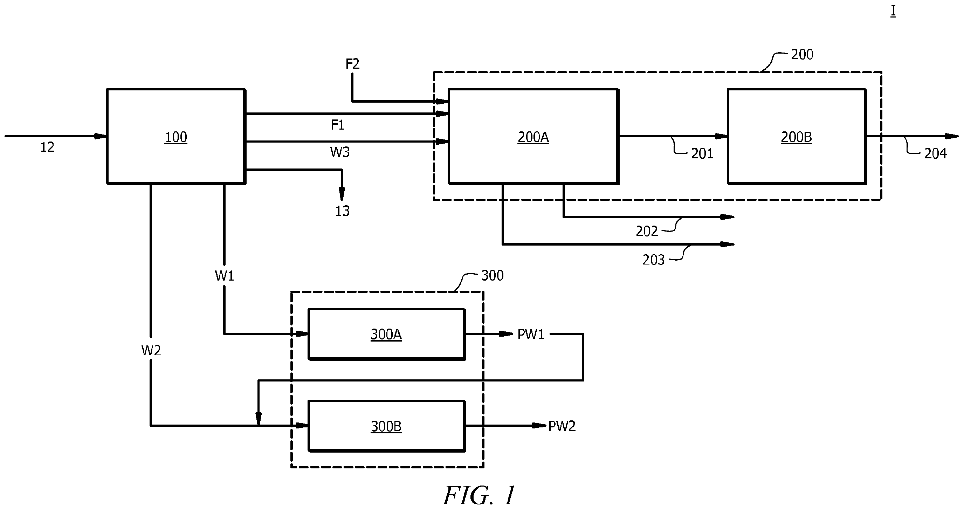

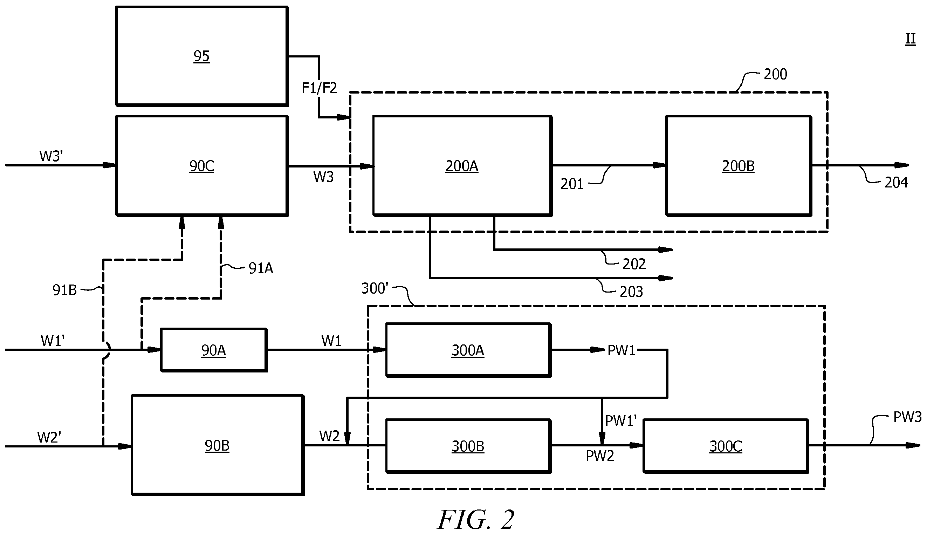

As noted hereinabove, a wastewater treatment system according to this disclosure comprises a biotreatment apparatus, incineration apparatus and a POSM apparatus. The biotreatment apparatus may comprise anaerobic biotreatment apparatus in combination with aerobic biotreatment apparatus, and a pretreatment apparatus operable to enhance the biotreatability of a wastewater. Description of such components of a wastewater treatment system will now be made with reference to Figure 1, which is a schematic of a wastewater treatment system I according to an embodiment of this disclosure, and Figure 2, which is a schematic of a wastewater treatment system II according to another embodiment of this disclosure. Wastewater treatment system I of Figure 1 comprises POSM plant, apparatus or system 100, incineration apparatus or system 200 and biotreatment apparatus or system 300. Wastewater treatment system II of Figure 2 comprises incineration apparatus or system 200, biotreatment apparatus or system 300', fuel source or fuel storage unit(s) 95, first wastewater storage or surge tank 90A (also referred to as first storage or surge tank; or first storage tank; or first surge tank), second wastewater storage or surge tank 90B (also referred to as second storage or surge tank; or second storage tank; or second surge tank), and third wastewater storage or surge tank 90C (also referred to as third storage or surge tank; or third storage tank; or third surge tank).

### Biotreatment Apparatus

The wastewater treatment system of this disclosure comprises a biotreatment apparatus. The biotreatment apparatus comprises anaerobic biotreatment apparatus and aerobic biotreatment apparatus. The biotreatment apparatus comprises anaerobic biotreatment apparatus configured to anaerobically biotreat a biodegradable, anaerobic biotreatment feed comprising wastewater to produce an anaerobically biotreated product; aerobic biotreatment apparatus configured to aerobically biotreat a biodegradable, aerobic biotreatment feed comprising wastewater to produce an aerobically biotreated product; or both. The anaerobically biotreated product makes up at least a portion of the aerobic biotreatment feed. Anaerobic biotreatment of a portion of the wastewater to be treated produces biogas, which may be used for energy recovery, making anaerobic biotreatment more cost effective than aerobic biotreatment.

Biotreatment apparatus 300 of wastewater treatment system I of Figure 1 comprises anaerobic biotreatment apparatus 300A and aerobic biotreatment apparatus 300B. Anaerobic biotreatment apparatus 300A may be considered a 'pretreatment' or 'first stage' apparatus upstream of aerobic biotreatment apparatus 300B, which may also be considered a 'pretreatment' or 'second stage' apparatus, that may be upstream of further aerobic biotreatment 300C (Figure 2), which may be considered a 'third' or 'final' stage of biotreatment.

### Anaerobic Biotreatment Apparatus

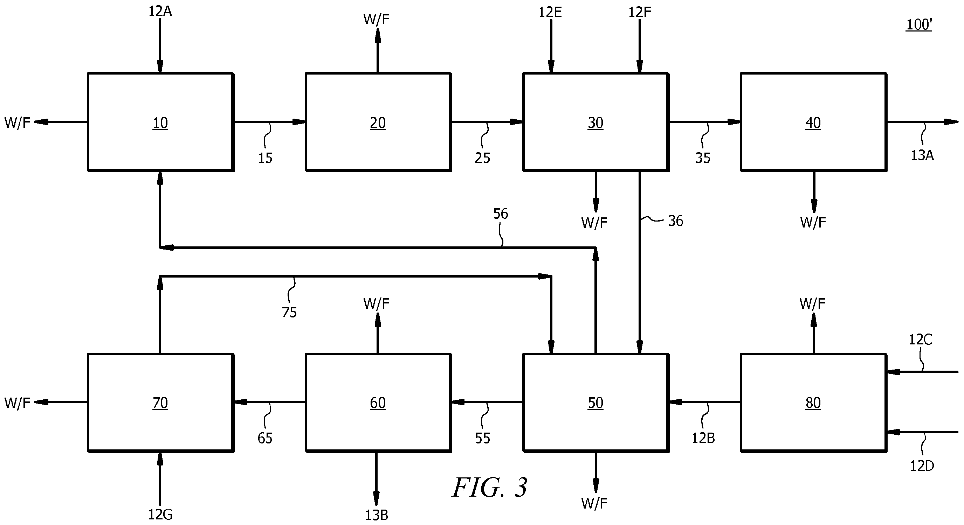

Anaerobic biotreatment apparatus 300A is any apparatus operable to anaerobically biotreat an anaerobic biotreatment feed comprising wastewater introduced thereto via anaerobic biotreatment feed line W1 and produce an anaerobically treated product water which is removed from anaerobic biotreatment apparatus 300A via anaerobically treated product water line PW1. In embodiments, anaerobic biotreatment apparatus 300A comprises granulated anaerobic biomass (GAB) that is separated out of the biotreated effluent stream (in anaerobically treated product water line PW1) for recycle into the biodegradable, anaerobic biotreatment feed to anaerobic bioreactor 300A under conditions favorable for anaerobic organics conversion. The wastewater in the anaerobic biotreatment feed introduced into anaerobic biotreatment apparatus 300A via anaerobic biotreatment feed line W1 is produced in a POSM process, as described in more detail hereinbelow *(e.g.,* the POSM system of Figure 3). The anaerobic biotreatment feed line W1 may be fluidly connected with a POSM apparatus 100.

A wastewater treatment system of this disclosure may further comprise one or more storage or surge tanks, such as first, second, and third storage tanks, 90A, 90B, and 90C, respectively, of the embodiment of Figure 2. Although referred to herein as 'storage' or surge' tanks, in addition to storing wastewater upstream of the anaerobic biotreatment apparatus, the aerobic biotreatment apparatus, and/or the incinerator, a storage tank may also be operable to pretreat the wastewater introduced thereto prior to introduction of the pretreated wastewater into a downstream unit. In embodiments, a first wastewater storage or surge tank 90A may be configured for the storage and/or treatment of wastewater prior to introduction thereof into anaerobic biotreatment apparatus 300A. In embodiments, first wastewater storage or surge tank 90A is operable to store wastewater introduced thereto via one or more wastewater feed lines W1', prior to introduction into anaerobic biotreatment apparatus 300A via anaerobic biotreatment feed line W1, such that should turndown of flow into anaerobic biotreatment apparatus 300A be employed, system operation may continue, with wastewater in wastewater feed line(s) W1' being stored in first surge tank 90A until operation may resume. First surge tank 90A (and/or second surge tank 90B and/or third surge tank 90C, described further hereinbelow) may be any surge tank known in the art; such surge tank may be operable to provide volume to be able to surge and/or to be able to homogenize the bioplant feed *(e.g.,* a large storage volume buffers on composition, bio-toxics, pH, etc.), and/or to be able to separate a floating organics layer from upstream entrained organics.

### Aerobic Biotreatment Apparatus

Aerobic biotreatment apparatus 300B is any apparatus operable to aerobically biotreat an aerobic biotreatment feed comprising wastewater introduced thereto via aerobic biotreatment feed line W2 and produce an aerobically treated product water which is removed from aerobic biotreatment apparatus 300B via aerobically treated product water line PW2. As discussed further hereinbelow the aerobic biotreatment feed comprises caustic wastewater. In embodiments, aerobic biotreatment apparatus 300B may comprise a moving bed bioreactor (MBBR), an activated sludge unit (ASU), or a combination thereof or another aerobic biotreatment reaction system. In embodiments, aerobic biotreatment apparatus 300B comprises aerobic biomass that is separated out of the biotreated effluent stream (in aerobically treated product water line PW2) for recycle into the biodegradable, aerobic biotreatment feed to aerobic bioreactor 300B under conditions favorable for aerobic organics conversion. The wastewater in the aerobic biotreatment feed introduced into aerobic biotreatment apparatus 300B via aerobic biotreatment feed line W2 is produced in a POSM process, as described in more detail hereinbelow (e.g., the POSM system of Figure 3). In such embodiments, aerobic biotreatment feed line W2 may be fluidly connected with a POSM apparatus 100.

The anaerobically biotreated water extracted from the anaerobic biotreatment apparatus is introduced into aerobic biotreatment apparatus 300B. For example, in the embodiment of Figure 1, anaerobically treated product water line PW1 is configured for the introduction of the anaerobically treated product water into aerobic biotreatment apparatus 300B. Anaerobically treated product water line PW1 may fluidly connect anaerobic biotreatment apparatus 300A with aerobic biotreatment feed line W2, wherein the anaerobically treated product water can be combined with wastewater in aerobic biotreatment feed line W2 and introduced into aerobic biotreatment apparatus 300B. In alternative embodiments, not shown in Figure 1, anaerobically treated product water may be introduced into aerobic biotreatment apparatus 300B separately from the wastewater in aerobic biotreatment feed line W2. Accordingly, the treated water in anaerobically treated product water line PW1 may be utilized as a dilution/salinity correction water for the aerobic biotreatment feed in aerobic biotreatment feed line W2. The treated water in anaerobically treated product water line PW1 may be utilized as a dilution water for existing aerobic biotreatment apparatus 300C described hereinbelow, for example via combination with aerobically treated product water in aerobically treated product water line PW2 via line PW1'; and/or as dilution water for the CWW in second storage or surge tank 90B via introduction thereto.

As indicated in the embodiment of Figure 2, a second wastewater storage or surge tank 90B may be configured for the storage and/or treatment of wastewater prior to introduction thereof into aerobic biotreatment apparatus 300B. In embodiments, second wastewater storage or surge tank 90B is operable to store wastewater introduced thereto via one or more wastewater feed lines W2', prior to introduction into aerobic biotreatment apparatus 300B via aerobic biotreatment feed line W2, such that should turndown of flow into aerobic biotreatment apparatus 300B be employed, system operation may continue, with wastewater in wastewater feed line(s) W2' being stored in second surge tank 90B until operation may resume. In embodiments, second wastewater storage or surge tank 90B is operable to store the treated product water in treated product water line PW1, for example should aerobic biotreatment apparatus 300B be offline. Thus, treated product water line PW1 may, in embodiments, fluidly connect anaerobic biotreatment apparatus 300A with second storage or surge tank 90B and/or with aerobic biotreatment feed line W2, such that the anaerobically treated product water can be introduced to second storage or surge tank 90B and/or aerobic biotreatment apparatus 300B.

In embodiments, second wastewater storage and surge tank 90B is operable to pretreat the wastewater therein prior to introduction into aerobic biotreatment apparatus 300B. For example, second storage tank 90B may be operable for neutralization and/or flotation of the wastewater to be sent to aerobic biotreatment apparatus 300B. For example, the wastewater introduced into second storage tank 90B via the one or more wastewater feed lines W2' comprise caustic wastewater comprising caustic salts and having too high a pH *(e.g.,* pH 12-13, in embodiments) for introduction into aerobic biotreatment apparatus 300B, and may be neutralized to a pH in the range of from 6 to 8 within second storage tank 90B. Within second storage tank 90B, flotation may be utilized to strip or separate the organics out of the wastewater prior to introduction into aerobic biotreatment apparatus 300B.

In embodiments, pH correction to 'neutral' pH (6-9) and flotation/organics phase separation may be effected in a separate piece of equipment, such as, without limitation, a DAF (dissolved air flotation) or DNF (dissolved nitrogen flotation). In embodiments, a guard downstream of second storage tank 90B may be operated such that residual free flowing organics coagulate and float on top of the bioplant water phase feed. Such an organics layer can be "skimmed" out of the tank on gravity flow by equipment such as, without limitation, a flex hose or similar.

In embodiments, a system is upgraded to provide the biotreatment as described herein. Such a system may already comprise a biotreatment plant (or 'bioplant'), and a biotreatment apparatus like biotreatment apparatus 300 described hereinabove is added upstream thereof. For example, biotreatment apparatus 300' of wastewater treatment system II of Figure 2 comprises anaerobic biotreatment apparatus 300A and aerobic biotreatment apparatus 300B upstream of aerobic bioplant 300C, which, in embodiments, may be present in a system (e.g., a legacy component of a POSM plant) being retrofit for wastewater treatment as described herein. In such embodiments, aerobically treated water exiting aerobic biotreatment apparatus 300B via aerobically treated product water line PW2 may be introduced into aerobic bioplant 300C, and treated water extracted from aerobic bioplant 300C via treated product water line PW3. For salinity correction, (part of) the effluent of the anaerobic biotreatment (e.g., a portion of the anaerobically treated product water in anaerobically treated product water line PW1) and/or the effluent of the aerobic bioplant 300C (*e*.*g*., a portion of the treated product water in treated product water line PW3) may be (re-)used. A feed or effluent stream (e.g., of anaerobic biotreatment apparatus 300A, aerobic biotreatment apparatus 300B, aerobic bioplant 300C, a rainwater or other water surge tank, or a combination thereof) may be introduced to anaerobic biotreatment apparatus 300A and/or aerobic biotreatment apparatus 300B as (e.g., low-chemical oxygen demand (COD)) dilution water. Low-COD may refer to a COD of less than 5000 mg COD/L for process water or less than 100 mg COD/L for sewer / rainwater. As used herein, COD refers to the total amount of oxygen required to oxidize all chemicals in the water, and biochemical oxygen demand (BOD) refers to the total amount of dissolved oxygen (DO) that is used by aerobic microorganisms when decomposing biodegradable organic matter in water.

The treated water extracted from wastewater treatment system I or II via treated water product line PW2 or PW3, respectively, may meet public outfall specifications as dictated by local Authorities.

### Incineration Apparatus

The wastewater treatment system of this disclosure comprises an incineration apparatus. The incineration apparatus comprises an incinerator/boiler combination (which may also be referred to herein as an 'incinerator') operable to produce steam and a flue gas from an incineration feed comprising wastewater, and may further comprise a flue gas treatment apparatus operable to remove one or more contaminants from the flue gas produced in the incinerator/boiler combination. For example, system I of the embodiment of Figure 1 comprises incinerator/boiler combination 200A (also referred to as an incinerator) upstream of flue gas treatment apparatus 200B and fluidly connected therewith via incinerator flue gas outlet line 201.

### Incinerator/Boiler Combination 200A

Wastewater to be incinerated is introduced into incinerator 200A via incinerator feed line W3. The wastewater in the incinerator feed introduced into incinerator 200A via incinerator feed line W3 is produced in a POSM process, as described in more detail hereinbelow (e.g., the POSM system of Figure 3). The incinerator feed line W3 may be fluidly connected with a POSM apparatus 100. As discussed further hereinbelow the incinerator feed comprises caustic wash wastewater from a POSM plant.

As indicated in the embodiment of Figure 2, a third wastewater storage or surge tank 90C may be configured for the storage and/or treatment of wastewater prior to introduction thereof into incinerator 200A. In embodiments, third wastewater storage or surge tank 90C is operable to store wastewater introduced thereto via one or more wastewater feed lines W3', prior to introduction into incinerator 200A via incinerator feed line W3, such that should turndown of flow into incinerator 200 be employed, system operation may continue, with wastewater in wastewater feed line(s) W3' being stored in third surge tank 90C until operation may resume. In embodiments, third surge tank 90C is operable to pretreat the wastewater therein prior to introduction into incinerator 200A. For example, third surge tank 90C may be operable for separation of a floating organics layer for recovery into the PO-process, rather than introduction into incinerator 200A. Third surge tank 90C provides surge function. A large volume surge tank homogenizes the incinerator feed, providing a more constant fuel composition, resulting in a more constant fuel value and fewer swings in steam production. In embodiments, third surge tank 90C is fluidly connected with wastewater feed line(s) W1', via line 91A, and/or with wastewater feed line(s) W2', via line 91B, whereby at least a portion of the wastewater in wastewater feed line(s) W1' and/or W2' can be diverted to incineration via third storage or surge tank 90C.

In embodiments, an evaporator (not shown) is upstream of incinerator 200 and/or downstream of third surge tank 90C, and operable to pretreat or concentrate the CWW prior to introduction into incinerator 200. A distilled overhead fraction from the evaporator, comprising water and organics, may be diverted to biotreatment. In such embodiments, the ratio of the POSM wastewater being sent to biotreatment to that being sent to incineration may be approximately 60:40 or higher.

In embodiments, a fuel is introduced into incinerator 200A, *i.e*., a fuel in addition to any organic or other combustible component of the wastewater that is introduced via the incinerator feed and may be considered a fuel. Such a fuel may be referred to herein simply as a fuel or as an 'additional' fuel, although it may be the only fuel introduced into the incinerator other than any combustible component of the wastewater. The fuel may, in embodiments, comprise a residual fuel formed in a PO and/or POSM process, an organic, heavy residue formed in a PO and/or POSM process, natural gas, biogas (e.g., from anaerobic biotreatment apparatus 300A), or a combination thereof.

In embodiments, the fuel comprises a residual fuel from a POSM process. In such embodiments, a fuel line F1 may fluidly connect incinerator 200A with POSM system 100. Alternatively or additionally, a fuel from a source other than a POSM process may be introduced into incinerator 200A via fuel line F2. Waste streams contaminated by ash (primarily sodium salts and spent catalyst remainders), and useful as a low quality fuel, are produced during POSM processes. Such residual fuels from a POSM process include, without limitation, organic, heavy residues as described in U.S. Patent Provisional Application Nos. 62/454,542 and 62/492,619. In embodiments, the heavy organic residue stream from the POSM process comprises PO-process byproducts, such as oxygenated aryl compounds, which may have, without limitation, molecular weights greater than or equal to 90 g/mol, 94 g/mol, 200 g/mol, 215 g/mol, or 225 g/mol. In embodiments, the heavy organic residue stream from the POSM process comprises oxygenated aryl compounds. In embodiments, the heavy organic residue stream from the POSM process comprises primarily oxygenated aryl compounds. In embodiments, the heavy organic residue stream from the POSM process comprises at least 20, 30, 40, or 50 weight percent oxygenated aryl compounds. Residual fuels may be produced in a POSM process such as described in more detail hereinbelow with reference to Figure 3. A fuel storage vessel(s) 95 may be utilized for the storage of the fuel(s). Fuel storage vessel(s) 95 may be a surge tank as described with reference to first, second, and third surge tanks 90A/90B/90C. In embodiments, a wastewater treatment system of this disclosure comprises a fuel storage vessel 95 for each of a plurality of waste fuels.

In embodiments, incinerator/boiler combination 200A may be operable via dry incineration technology, wherein organics in the CWW and fuels are oxidized to form CO₂ and water, and wherein water in the CWW of the incinerator feed evaporates and becomes part of the flue gas, and salts in the CWW precipitate as solids. Via 'dry incineration', no liquid water stream is formed and/or condensed in the incineration/flue gas treatment/salt blowdown system. The boiler utilizes a boiler feed water (also referred to herein as 'BFW'), which may come from a POSM plant, to produce the *(e.g.,* high pressure (also referred to herein as 'HP')) steam. As no new wastewater stream is generated, such incineration technology is referred to as 'dry'.

In embodiments, the incinerator is operable via dry incineration technology with salts blowdown, and produces a dry salt product. The salt product may be non-toxic (*i.e*., relative to the CWW and fuel incinerator feed streams which contain toxic components, and fully oxidized (*e.g*., washing soda, sodium carbonate)), and may be utilized and/or sold as an alkalinity source, or discarded, such as, without limitation, in a landfill, or the like. For example, in the embodiment of Figure 1, a salts blowdown outlet line 202 may be configured for the removal of blowdown salts from incinerator/boiler combination 200A. The salts may contain sodium from the caustic and/or residual metals from a PO-process. The carbon of the organics in the incinerator feed may convert to carbon dioxide gas, and be partly captured by the sodium to form Na₂CO₃ 'soda'. This salt is considered a stable, fully oxidized, non-reactive stream, although it may, in embodiments, contain trace metals embedded in the soda.

In embodiments, the incinerator/boiler combination 200A comprises cooled membrane walls and the absence of any refractory, which obviate/minimize replacements/repairs of refractory due to degeneration of the refractory due to alkali attack thereof. In embodiments, the system is a single street design comprising a single incinerator/boiler. As used herein 'single street' refers to a system employing a single incinerator/boiler combination and/or flue gas treatment/stack, as opposed to a 'double street' design, which would utilize two parallel incinerator boiler assemblies and/or flue gas treatments/stacks. In embodiments, third surge tank 90C is operable as a pseudo-second street, whereby if the incinerator is out of service for maintenance, the third surge tank 90C can surge until the incinerator can be restarted.

In embodiments, the boiler of the incinerator/boiler combination 200A is operable to produce steam, which may be removed from incinerator/boiler combination 200A via steam outlet line 203. In embodiments, the boiler of incinerator/boiler combination 200A is operable to produce superheated HP steam at a pressure in the range of from 50 barg to 60 barg, and a temperature in the range of from 320°C to 360°C. The amount of steam produced may be dependent upon PO-plant throughput, and the amount of CWW and fuels produced. Without limitation, in embodiments, the boiler produces from 50 to 150 t/h, from 60 to 100 t/h, from 65 to 75 t/h, or up to 115 t/h of steam. In embodiments, the boiler feed water comes from an existing PO-process. This BFW may be condensed from the steam used in PO-plant reboilers (e.g., for distillation purposes). A portion of the condensate can be sent to the boiler of incinerator/boiler combination 200A, and the rest or a portion thereof pumped back to the boilers for BFW treatment and the production of more steam.

In embodiments, the steam in steam outlet line 203 is utilized in a PO-process as heat input *(e.g.,* for distillation). Alternatively or additionally, the steam in steam outlet line 203 may be utilized for other purposes, e.g. to generate electricity, thus further enhancing process economics. In embodiments, the incinerator comprises a dry technology incinerator/boiler that is operable to provide at least 50, 60, 70, 80, or 90% heat efficiency. The heat efficiency is the energy content of the produced steam relative to the total energy content of the feed streams.

Although resulting in the concomitant production of another wastewater stream and a lower efficiency (*e.g*., approximately 30% heat efficiency), in embodiments, a biotreatment apparatus comprising anaerobic biotreatment is utilized in conjunction with a wet technology incinerator, such as a submerged combustion incinerator. Should such wet incineration technology be utilized, and an additional wastewater stream produced thereby, up to 100% of such a wastewater stream may, in embodiments, be biotreated via introduction into biotreatment apparatus 300/300' *(e.g.,* via introduction into anaerobic biotreatment apparatus 300A, aerobic biotreatment apparatus 300B, and/or aerobic biotreatment apparatus 300C). Wet incineration technology includes submerged combustion, in which the flue gas is quenched in water, and technologies in which salt blowdown is captured in a vessel with water.

### Flue Gas Treatment Apparatus 200B

As noted hereinabove, a system of this disclosure may further comprise flue gas treatment apparatus 200B configured to remove at least one contaminant from the flue gas produced in incinerator/boiler combination 200A, and extracted therefrom via flue gas outlet line 201. For example, wastewater treatment system I of the embodiment of Figure 1 and wastewater treatment system II of the embodiment of Figure 2 comprises flue gas treatment apparatus 200B configured to remove at least one contaminant from the flue gas introduced thereto via flue gas outlet line 201, and provide a treated flue gas which may be extracted therefrom and sent, for example, to a stack for disposal via stack gas line 204. Flue gas treatment apparatus 200B may be any flue gas treatment apparatus known in the art. In embodiments, flue gas treatment apparatus 200B operates via 'dry' technology, without the use of a water stream or the production of a new wastewater stream. In embodiments, the contaminant comprises, for example, dust, NOx, smaller amounts of Cl and/or S, or a combination thereof. In embodiments, flue gas treatment apparatus 200B comprises a bag house filter or other dry de-dusting apparatus configured to remove a particulate contaminant from the flue gas in flue gas outlet line 201. In embodiments, flue gas treatment apparatus 200B comprises a selective catalytic reduction (SCR) unit configured to remove NOx contaminant from the flue gas. The sodium carbonate dust may also capture smaller amounts of Cl and/or S that may be present in the feeds to incinerator/boiler combination 200A.

### PO/POSM Apparatus

As noted hereinabove, a system of this disclosure may further comprise an apparatus or system configured to provide a wastewater to be treated. The wastewater is a product of a POSM process, and, in embodiments, a system of this disclosure further comprises a POSM system. For example, wastewater treatment system I of Figure 1 comprises POSM plant, apparatus, or system 100. POSM system 100 is operable to produce product propylene oxide and styrene monomer, extracted from POSM system 100 via one or more POSM product outlet line(s) 13, from reactants, which may be introduced via one or more POSM reactant inlet line(s) 12.

A POSM plant from which the wastewater to be treated is produced may comprise any POSM system known to those of skill in the art. POSM processes are known in the art, and a wastewater treated via the system and method of this disclosure can be produced via any known POSM process. For example, POSM processes are described in U.S. Patents No. 3,351,635; 3,439,001; 4,066,706; 4,262,143; and 5,210,354. In embodiments, the POSM system comprises an ethylbenzene production unit configured to produce ethylbenzene ('EB'); an oxidation unit configured to oxidize ethylbenzene and produce ethylbenzene hydroperoxide ('EBHP'); a concentration unit configured to concentrate the product EBHP; an epoxidation/propylene separation apparatus configured for the production of propylene oxide ('PO') via epoxidation of propylene in the presence of EBHP and an epoxidation catalyst and the separation of propylene and crude product PO from an epoxidation product thereof to provide a heavy component mixture comprising MBA, acetophenone (ACP), and EB; PO purification apparatus configured to purify the crude PO to provide a purified PO product; EB recovery/MBA separation apparatus configured to separate EB from the heavy component mixture and provide an ACP/MBA product; dehydration apparatus configured to produce styrene monomer product via dehydration of the ACP/MBA product and provide an ACP product; hydrogenation apparatus configured to hydrogenate the ACP product and produce an MBA-containing product; or a combination thereof.

A POSM system operable to produce the wastewater to be treated via the herein-disclosed system and method will now be described with reference to Figure 3, which is a schematic of a POSM system 100' according to this disclosure. In embodiments of the POSM process via which the POSM wastewater to be treated is generated, ethyl benzene is reacted with molecular oxygen at elevated temperature to form ethyl benzene hydroperoxide or EBHP. Thus, a POSM system from which the wastewater to be treated is produced comprises an oxidation unit. For example, POSM system 100' comprises oxidation unit 10. Oxidation unit 10 can be any apparatus operable to produce EBHP via oxidation of EB. For example, oxidation unit 10 can be operable to produce an oxidation product comprising EBHP, which may be removed from oxidation unit 10 via EBHP product line 15, via oxidation of EB, which may be introduced into oxidation unit 10 via oxidation unit EB feed line 56, with an oxidant, such as air, which may be introduced into oxidation unit 10 via oxidant inlet line 12A. The oxidation product may comprise unreacted EB, ACP, and/or MBA in addition to EBHP, in embodiments. In embodiments, a wastewater stream W treated via the disclosed system and/or method is produced in oxidation unit 10. In some embodiments this waste water may be the result of caustic washing one or more of the peroxide containing streams.

As noted hereinabove, a POSM system from which the wastewater to be treated is produced may comprise a concentration unit 20, configured to concentrate the product comprising EBHP, which may be introduced thereto via EBHP product line 15. Concentrated EBHP product may be removed from concentration apparatus via concentrated EBHP outlet line 25.

In embodiments, the ethyl benzene hydroperoxide is subsequently reacted with propylene to form propylene oxide and MBA. The epoxidation reaction mixture may be caustic washed and subjected to a series of distillations in order to separate materials contained therein. In embodiments, the epoxidation reaction mixture is distilled to separate unreacted propylene overhead from heavier components. The separated propylene may be recycled to the epoxidation step. In embodiments, the heavier components are further distilled, optionally after caustic wash, to separate product propylene oxide. Thus, as noted hereinabove, a POSM system from which the wastewater to be treated is produced comprises an epoxidation/propylene separation apparatus configured for the production of propylene oxide ('PO') via epoxidation of propylene in the presence of EBHP and an epoxidation catalyst and the separation of propylene and crude product PO from the epoxidation reaction mixture to provide a heavy component mixture comprising MBA, ACP, and EB. For example, POSM system 100' comprises epoxidation/propylene separation apparatus 30. Epoxidation/propylene separation apparatus 30 can be any apparatus operable to produce a product comprising PO via epoxidation of propylene in the presence of EBHP and an epoxidation catalyst, and separate propylene and a crude PO from the product comprising crude PO. For example, concentrated EBHP product can be introduced into epoxidation/propylene separation apparatus 30 via concentrated EBHP outlet line 25. Epoxidation catalyst and propylene may be introduced into epoxidation/propylene separation apparatus 30 via epoxidation catalyst feed line 12E and propylene feed line 12F, respectively. The epoxidation catalyst may comprise molybdenum, in embodiments.

Within epoxidation/propylene separation apparatus 30, epoxidation of propylene may be effected to produce an epoxidation product mixture containing unreacted propylene, product PO, ACP, MBA, and/or EB. Epoxidation/propylene separation apparatus 30 may also be operable to separate (*e.g*., via distillation) propylene and a crude PO product, which may be removed from epoxidation/propylene separation apparatus 30 via crude PO line 35, from a heavy component mixture comprising MBA, ACP, EB, or a combination thereof. The heavy component mixture may be removed from epoxidation/propylene separation apparatus 30 via heavy component mixture outlet line 36. As noted above, one or more caustic washes may be effected within epoxidation/propylene separation apparatus 30. In embodiments, caustic wash water (or 'caustic wash purge') from such caustic wash(es) are treated via the wastewater treatment system and method of this disclosure. Such a caustic wash wastewater purge may comprise organics up to approximately 20% and/or biological toxics (*e.g*., phenol derivatives and/or other PO-process byproducts), and, in embodiments, such a caustic wash water formed during epoxidation/propylene separation is subjected to incineration, as described herein. In embodiments, a caustic wash water formed during epoxidation/propylene separation is combined with a wastewater stream produced in oxidation unit 10, and the resulting water, and optionally additional wastewater from the POSM process, is (*e.g*., stored in third surge tank 90C and) subjected to incineration.

As noted hereinabove, a POSM system from which the wastewater to be treated is produced may comprise a PO purification apparatus configured to purify the crude PO to provide a purified PO product. For example, POSM system 100' comprises PO purification apparatus 40. Crude PO may be introduced into PO purification unit 40 via crude PO line 35. Product PO may be removed from PO purification apparatus 40 (and POSM system 100') via PO product line 13A.

As noted hereinabove, a POSM system from which the wastewater to be treated is produced comprises an ethylbenzene production unit. For example, POSM system 100' comprises ethylbenzene production unit 80. Ethylbenzene production unit 80 can be any apparatus operable to produce EB. For example, EB production unit 80 can be operable to produce EB, which may be removed from EB production unit 80 via EB line 12B, from ethylene, which may be introduced into EB production unit 80 via ethylene reactant feed line 12C, and benzene, which may be introduced into EB production unit 80 via benzene reactant feed line 12D.

In embodiments, the heavier components separated from unreacted propylene and crude product PO in epoxidation/propylene separation apparatus 30 are further separated (e.g., distilled), optionally after caustic wash, via distillation, to separate unreacted ethyl benzene, which can be recycled, optionally after a caustic wash, and product MBA. Thus, as noted hereinabove, a POSM system from which the wastewater to be treated is produced may comprise an EB recovery/MBA separation apparatus. For example, POSM system 100' comprises EB recovery/MBA separation apparatus 50. The EB recovery/MBA separation apparatus can be any apparatus configured to separate EB from a heavy component epoxidation reaction mixture and provide an ACP/MBA product. For example, EB in EB line 12B and the MBA, ACP, and/or EB in heavy component mixture outlet line 36 may be introduced into EB recovery/MBA separation apparatus 50, and EB separated therefrom and removed from EB recovery/MBA separation apparatus 50 via oxidation unit EB feed line 56. EB recovery/MBA separation apparatus 50 may separate EB from an MBA/ACP stream by distillation, and may utilize one or more caustic washes. In embodiments, caustic wash water from such caustic wash(es) is treated via the wastewater treatment system and method of this disclosure. An MBA product comprising MBA/ACP may be removed from EB recovery/MBA separation apparatus 50 via MBA/ACP line 55.

The MBA product stream is dehydrated to produce styrene monomer. Thus, as noted hereinabove, a POSM system from which the wastewater to be treated is produced comprises a dehydration unit. For example, POSM system 100' comprises dehydration unit 60. Dehydration unit 60 can be any apparatus operable to produce styrene monomer. For example, dehydration unit 60 can be operable to produce product styrene monomer via dehydration of MBA. Product styrene monomer may be removed from dehydration unit 60 via styrene product line 13B, and an ACP-containing stream may be removed from dehydration unit 60 via ACP line 65. Dehydration unit 60 produces dehydration water, as for each molecule of styrene produced, a water molecule is split off a MBA molecule. The wastewater treated via this disclosure comprises MBA dehydration water produced in a MBA dehydration unit 60. In embodiments, up to 100% of the MBA dehydration water not recycled to POSM as make-up water is subjected to biotreatment as described herein. In embodiments, dehydration reactors of dehydration unit 60 are acid catalyzed, and caustic wash is utilized to neutralize acid catalyst remainders, providing a dehydration water. A(nother) dehydration water may separate out as a water phase under the produced crude styrene organic phase. The dehydration water may be biodegradable, slightly acidic, and contain amounts of dissolved styrene, mono-propylene glycol (food for the biomass), and/or some organic biotoxics.

As noted hereinabove, a POSM system from which the wastewater to be treated is produced may comprise a hydrogenation unit. For example, POSM system 100' comprises hydrogenation unit 70. Hydrogenation unit 70 can be any apparatus operable to produce MBA from ACP. For example, hydrogenation unit 70 can be operable to produce MBA via hydrogenation of the ACP introduced thereto via ACP line 65 with hydrogen introduced thereto via hydrogen reactant feed line 12G. The MBA produced in hydrogenation unit 70 may be introduced into EB recovery/MBA separation unit 50 via MBA line 75.

Wastewater W to be treated according to this disclosure may be produced in or between one or more of the steps or apparatus of a POSM process, as indicated by lines W in Figure 3. Similarly, a fuel subjected to incineration (*i.e.*, in addition to any combustible material introduced with the wastewater) may be produced in or between one or more of the steps or apparatus of a POSM process, as indicated by lines F in Figure 3.

The incinerator feed and the biotreatment feed (*e.g.,* both the anaerobic biotreatment feed and the aerobic biotreatment feed) comprise wastewater from a POSM process. In embodiments, the wastewater streams that are biodegradable are kept separate from the caustic wastewater with pH in the range of from 11-14, in order to prevent mixing with caustic streams that are not or are hardly biodegradable. The wastewater introduced via line W/W1/W1'/W2/W2'/W3/W3' comprises caustic wash water, MBA dehydration water, and optionally: POSM process wastewater, sewer water, sanitary water, rainwater, or a combination thereof. The anaerobic feed wastewater in line W1/W1' comprises MBA dehydration water, the aerobic feed wastewater in line W2/W2' comprises caustic wash water optionally along with process water, sewer water, rainwater, and/or sanitary water, and the incinerator feed in line W3/W3' comprises caustic wash water. The wastewater in lines W/W1/W1'/W2/W2'/W3/W3' may be from common or disparate sources within a POSM process (e.g., the POSM system of Figure 3). Depending on composition, stability, reliability, and economics, the various wastewater streams from the PO-process can be subjected to anaerobic and/or aerobic biotreatment, as can be determined by one of skill in the art.

Any waste fuel can be utilized as fuel sent to incinerator 200. In embodiments, the fuel sent to incinerator 200 via line F/F1 comprises a heavy bottoms purge out of EB recovery/MBA separation apparatus 50. Such heavy bottoms purge may comprise a mixture of various heavy hydrocarbons, including, without limitation, one or more of propylene glycol oligomers, methylbenzyl alcohol ether, alkylated phenols, methylbenzyl alcohol, phenyl ethers, organic sodium salts, trace metals and residual caustic. In embodiments, the fuel sent to incinerator 200 via line F/F1 comprises a heavies purge out of a POTBA process, which may be a mixture of various heavy hydrocarbons, including, without limitation, one or more of propylene glycol aliphatic oligomers C9-C12, t-butoxy propanols, acids C2-C4 and heavies. The fuel to incinerator 200 may, in embodiments, comprise another fuel from a PO-process, biogas, NG, and/or biomass that is produced in the biotreatment apparatus.

### Other Possible Components of Wastewater Treatment System

In embodiments, a wastewater treatment system according to this disclosure further comprises pretreatment apparatus operable to enhance the biotreatability of a wastewater and/or reduce the volume of wastewater to be incinerated. By way of nonlimiting example, in embodiments, such pretreatment apparatus can comprise a wet air oxidation unit and/or a wastewater distillation unit upstream of a biotreatment apparatus 300/300' and/or an incinerator 200.

In embodiments, a wastewater treatment system according to this disclosure further comprises polishing apparatus operable to further reduce the COD of the effluent of the biotreatment apparatus. For example, polishing apparatus (not shown) may be positioned downstream of aerobic biotreatment apparatus 300B or 300C, and configured to further reduce the COD of the treated water extracted therefrom via product water line PW2 or PW3, respectively. Without limitation, such polishing apparatus may comprise sand filtration and/or activated carbon and/or selective trace metal adsorption apparatus and/or UV treatment, or the like. For example, UV treatment or the like may be utilized to increase the BOD/COD-ratio via break-down of hard to treat or persistent COD downstream of aerobic biotreatment apparatus 300B prior to introduction of the treated water in aerobically treated product water line PW2 into biotreatment plant 300C, and/or UV treatment or the like can be applied as a post-treatment guard to further reduce COD in the biotreatment effluent to public outfall in product water line PW3.

### Method for Wastewater Treatment

The invention relates to a method of wastewater treatment. The method comprises partial anaerobic and partial aerobic biotreatment. The method comprises partial incineration and partial biotreatment (anaerobic and aerobic). The method comprises subjecting an anaerobic biotreatment feed comprising wastewater to anaerobic biotreatment to produce an anaerobically biotreated product, and subjecting an aerobic biotreatment feed comprising wastewater to aerobic biotreatment to produce a treated water. For example, with reference to Figures 1 and 2, a first wastewater is introduced via anaerobic biotreatment feed line W1, as anaerobic biotreatment feed into anaerobic biotreatment apparatus 300A of biotreatment apparatus 300, and subjected to anaerobic biotreatment producing biogas and an anaerobically biotreated product water PW1. As noted in the embodiment of Figure 2, the first wastewater may be provided from a first surge tank 90A.

The anaerobically biotreated product water in anaerobically biotreated product water line PW1 may be combined with a second wastewater stream, in aerobic biotreatment feed line W2, and introduced into aerobic biotreatment apparatus 300B. The anaerobically biotreated product water in anaerobically biotreated product water line PW1 is introduced into aerobic biotreatment apparatus 300B as dilution water or as fresh feed in case of an off-spec anaerobic reactor situation. As noted in the embodiment of Figure 2, the second wastewater may be provided from a second surge tank 90B, in which it may have been treated as described hereinabove for the removal and/or neutralization of a component(s). Within aerobic biotreatment apparatus 300B, the water is aerobically biotreated, and a treated water is extracted via aerobically treated product water line PW2. The wastewater introduced via anaerobic biotreatment feed line W1 and the wastewater introduced via aerobic biotreatment feed line W2 are produced in a POSM plant 100, as described hereinabove. The wastewater in anaerobic biotreatment feed line W1 comprises MBA dehydration water and the wastewater in aerobic biotreatment feed line W2 comprises caustic waste purge such as from the styrene reactor/distillation section caustic wash in the POSM process. The aerobically treated product water in aerobically treated product water line PW2 may be introduced into a downstream biotreatment plant 300C, as indicated in the embodiment of Figure 2, and a treated product water extracted therefrom via treated product water line PW3.

The three stages (anaerobically treated product water in anaerobically treated product water line PW1 plus the aerobically treated product water in aerobically treated product water line PW2 plus the treated product water in treated product water line PW3) may be designed such that the COD in the feed streams thereto is converted to well below the Authorities dictated specification for disposal onto public waters, targeting a residual COD of approximately 20-50 mg COD/L, in embodiments.

According to the invention, the wastewater treatment method comprises producing, via an incinerator/boiler combination, a flue gas and steam from an incinerator feed comprising caustic wash wastewater; and producing a treated water by biotreating a biotreatment feed comprising wastewater; the wastewater in the incinerator feed and the biotreatment feed comprise POSM wastewater. With reference to the embodiment of Figures 1 and 2, a portion of the wastewater to be treated is introduced into incinerator 200 via incinerator feed line W3, while a remainder of the wastewater to be treated is introduced into biotreatment apparatus 300, and subjected to anaerobic and aerobic biotreatment. As noted in the embodiment of Figure 2, the incinerator feed wastewater may be provided from a third surge tank 90C. The wastewater in incinerator feed line W3 comprises caustic purge from a POSM process, which can, in embodiments, be a mix of remaining wastewater streams that are not sent to biotreatment, *e.g.,* a spent caustic purge from a caustic wash in epoxidation/propylene separation apparatus 30. The wastewater(s) sent to incinerator 200 may be selected based on project economics for a given application, *i.e.,* balancing biotreatment relative to incineration with energy recovery.

A fuel as described hereinabove may be introduced into incinerator 200 via fuel line F1 and/or F2. As depicted in the embodiment of Figure 2, the fuel may be provided from a fuel storage tank 95. Within incinerator/boiler combination 200A, a flue gas and steam are produced, which may be removed from incinerator/boiler combination 200A via flue gas outlet line 201 and steam outlet line 203, respectively. The steam extracted via steam outlet line 203 may be utilized, for example, in a HP (high pressure) steam grid. In embodiments, 65 to 75 tons/h, 50-100 t/h, or 60-90 t/h of steam is produced, or can be letdown to a lower pressure steam grid. In embodiments, the flue gas is introduced via flue gas outlet line 201 into flue gas treatment apparatus 200B, and treated therein for the removal of a contaminant, as described hereinabove. Treated flue gas may be sent via line 204 to a stack for removal from system I/II. In embodiments, dry incineration technology is utilized, and a dry salts blowdown solids product is removed via solid salt product line 202. In embodiments, 1-2 tons/h, 1-3 tons/h, or 1, 2, or 3 t/h of salt is produced.

As noted hereinabove, according to the invention, the treated wastewaters are produced via a POSM process. As noted above, in such a process, ethyl benzene is reacted with oxygen to form ethyl benzene hydroperoxide; the ethyl benzene hydroperoxide is reacted with propylene to form an epoxidation reaction mixture comprising PO, ACP, MBA, and unreacted EB and/or propylene; the epoxidation reaction mixture is caustic washed and subjected to a series of distillations in order to separate materials (e.g., propylene) contained therein from heavier components including PO, EB, ACP, and MBA; the heavier components may be further distilled, optionally after caustic wash, in a series of distillations to separate product PO and then unreacted EB, which may be recycled, optionally after a caustic wash, from an MBA/ACP stream; and the MBA in the MBA/ACP stream may be dehydrated to produce styrene monomer product. The wastewater produced during a POSM process ( MBA dehydration water, caustic wash water, and optionally other wastewater streams produced in a POSM plant, etc.) is treated according to the invention.

The POSM process may produce a total volume of wastewater for disposal, and from 5 to 95, from 10 to 90, or from 20 to 80 volume percent of the total wastewater is introduced into an incinerator/boiler combination 200A *(e.g.,* via incinerator/wastewater feed line W3/W3'). In embodiments, about 60 volume percent of the total wastewater is introduced into the incinerator/boiler combination. The POSM process may produce a total volume of wastewater for disposal, and from 5 to 95, from 10 to 90, or from 20 to 80 volume percent of the total wastewater is subjected to biotreatment comprising anaerobic biotreatment and aerobic biotreatment. In embodiments, about 40 volume percent of the total wastewater is subjected to biotreatment comprising anaerobic biotreatment and aerobic biotreatment. In embodiments, the wastewater comprises caustic wash water and MBA dehydration water from a POSM process, and about 40 volume percent of the total wastewater to be treated is subjected to dry incineration, and about 60 volume percent of the total wastewater is subjected to biotreatment (e.g., both anaerobic and aerobic). According to the invention, the incinerator feed comprises caustic wash water from a POSM process. the anaerobic biotreatment feed comprises MBA dehydration water from a POSM process, and the aerobic biotreatment feed comprises caustic wash water and the anaerobically treated MBA dehydration water from a POSM process. In embodiments, the percentage of wastewater subjected to biotreatment may be optimized by balancing maximizing of steam production via the boiler with ensuring feasibility for biotreatment (*e.g.*, pretreatment as needed) for as many as possible wastewater streams.

In embodiments, wastewater streams with lower COD concentration (*e.g*., less than 150000 mg COD/L) are subjected to biotreatment, and wastewater streams with higher COD concentration (*e.g*., greater than 150000 mg COD/L) and/or those with high bio-toxicity are subjected to incineration. Economically, as sending more of the wastewater to biotreatment may be cheaper per ton and also enables the production of more steam via incineration due to a reduced water content of the incinerator feed, such may be desirable. However, bio-toxicity and/or the increased cost of handling an increasing COD load may make sending certain wastewater streams to biotreatment infeasible.

### Features

The system and method of this disclosure provide for treatment of CWW. The utilization of anaerobic biotreatment enables handling of high pollution load wastewater with operating expense cost reduction by means of biogas production and limiting sludge wasting costs relative to total aerobic treatment, which may utilize a large conventional activated sludge unit (ASU) based treatment system (and associated higher operating expense, *e*.*g*., energy costs for aeration and sludge treatment) which would also incur a higher capital expense (*e.g*., due to larger sized equipment and aeration compressors).

The wastewater treatment according to this disclosure is effected via partial biotreatment (both anaerobic and aerobic) in combination with partial incineration. Utilization of dry incineration technology, in embodiments, enables a higher heat efficiency (80-90%) than wet (*e.g*., submerged combustion) technology, which provides about 30% heat efficiency. Utilization of residual waste fuel(s) from a POSM process or from external sources as heating value inputs to the incinerator may reduce disposal and additional emissions, in embodiments. In embodiments, design of an incinerator/boiler combination comprising cooled membrane walls, without the use of refractory as conventionally applied onto the hot inner wall of the incinerator/boiler sections, provides for reduced maintenance that would otherwise result from degeneration of refractory by alkali, while meeting stringent emission requirements. The absence of refractory may provide for reduced maintenance cost, as well as a reduced time period for maintenance; utilization of an incinerator without refractory may enable brief maintenance times (*e.g*., less than two weeks, in embodiments), whereby third surge tank 90C can serve as incinerator feed storage during maintenance, thus obviating the investment in a second parallel street incinerator when high plant reliability / availability is a requirement.

Dry incineration with salts blowdown handling may, in embodiments, provide for a dry salt product which may be non-toxic, fully oxidized, and readily disposed of, or utilized or sold as an alkalinity source, whereas conventional wet incineration technology results in salts dissolved in a wastewater stream generated during the incineration that also contain heavy and/or trace metals and need cleaning prior to discharge to public water in order to meet Authorities requirements. Utilization of a dry incinerator as described herein may, in embodiments, provide for a single street design having high reliability, *e.g.,* due to avoidance of extended maintenance from refractory degradation, with features including, but not limited to, surge volume tankage, sparing, and minimized boiler fouling.

In embodiments, the herein disclosed system and method provide for treatment of substantially all of the wastewater streams (including caustic waste water streams) from a POSM plant. The ratio of wastewater being subjected to biotreatment relative to that being incinerated is a design parameter that can be optimized, as known to those of skill in the art. In embodiments, a 40:60 ratio of wastewater being subjected to biotreatment to that being incinerated is utilized, and no to little pre-, inter-, and/or post-treatment of the wastewater is employed.

In embodiments, all the wastewater streams from a POSM plant are subjected to wastewater treatment via the system and method described herein, providing a total solution.

The following examples merely illustrate the system and method of this disclosure.

### EXAMPLES

### Example 1: Separate First Stage Biotreatment of Two Wastewater Streams Versus Combined First Stage Biotreatment of a Combined Wastewater Stream

Wastewater from an existing continuously operated POSM plant was evaluated for treatment. A first wastewater stream comprised MBA dehydration water from the dehydration water coalescer (used to separate off a free styrene organics phase) at 7 tons/hour having a COD (chemical oxygen demand) load of about 175 kg COD/hour at pH of approximately 3. A second wastewater stream comprised caustic wash wastewater purge from styrene reactors and distillation caustic wash (to separate off acidity and phenols) of MBA dehydration unit 60 at 5.5 tons/hour comprising a COD-load of about 660 kg COD/hour and about 250 kg/h Na-salts, and an average molecular weight of 115 from formic acid, acetic acid, carbonates, oxalic acid, benzoic acid and phenolic acids at pH levels of approximately 11 to 13.

Feasibility of anaerobic biotreatment of the first and the second wastewater streams was tested in lab pilot tests, and showed that anaerobic biotreatment of the first wastewater stream alone by conventional granulated anaerobic biomass (GAB) treatment systems was feasible (greater than 99% COD removal at COD loading rate of 10 kg COD/m³-day). The anaerobic biotreatment of a combination of the first and second wastewater streams (comparative test) was also possible with proper dilution (to reduce salt content) after pretreatment by means of pH-adjustment/organic phase separation resulting in a reduced COD content of less than 35 g COD/liter. GAB anaerobic treatment, using 2X diluted influent to reduce the salt content to about 10-12 mS/cm, showed over 90% COD removal under stable operating conditions at COD loading rates of less than 7 kg COD/m³-d. For undiluted wastewater, the GAB anaerobic treatment was more constrained by salinity/conductivity (caustic salts) and/or from bio-toxics, such as, without limitation, ethyl-phenols.

An aerobic biological wastewater treatment plant (WWTP) comprising a hybrid MBBR/ASU system was operable to treat a combined stream comprising the first and second wastewater streams, with a COD loading rate of greater than 10 kg/COD/m³-d at 10g MLSS (mixed liquor suspended solids) and about 2.5 g NaCl/liter resulting in about 97% conversion to effluent COD concentrations of less than 100 ppm (comparative test).

Studies were performed to evaluate treatment of the wastewater via a first stage biotreatment comprising, according to this disclosure, anaerobic biotreatment of the first wastewater stream followed by aerobic biotreatment of the effluent from the anaerobic biotreatment in combination with the second wastewater stream, followed by introduction of the first stage biotreatment effluent into the existing aerobic biological wastewater treatment plant (WWTP). Thus, in this experiment, the anaerobic biotreatment feed introduced into anaerobic biotreatment apparatus 300A of Figure 2 comprised the first wastewater stream, and the aerobic biotreatment feed introduced into aerobic biotreatment apparatus 300B comprised the effluent from the anaerobic biotreatment apparatus and the second wastewater stream. The studies were performed to determine if separate first stage treatment (*i.e*., anaerobic for the first wastewater stream and aerobic for the second wastewater stream) would allow for optimal first stage anaerobic biotreatment of the MBA dehydration wastewater in the first wastewater stream, prevent introduction of salinity in the first wastewater stream, and allow for turndown of the first or second wastewater stream to biotreatment independent from the other wastewater stream.

For comparison, wastewater comprising a combination of the first and second wastewater streams was treated by a first stage biotreatment comprising anaerobic biotreatment of the combined stream followed by aerobic biotreatment of the effluent from the anaerobic biotreatment of the combined stream. Thus, in this experiment, the anaerobic biotreatment feed introduced into anaerobic biotreatment apparatus 300A of Figure 2 comprised both the first wastewater stream and the second wastewater stream, and the aerobic biotreatment feed introduced into aerobic biotreatment apparatus 300B comprised the effluent from the anaerobic biotreatment apparatus. The target COD conversion for the first stage (separate or combined) was greater than 90%.

Effluent streams of the separate or combined first stage biotreatment of the first and the second wastewater streams were fed into the existing, on-site, aerobic WWTP.

### Anaerobic Biotreatment of First Wastewater Stream Alone

When the first wastewater stream was introduced into the anaerobic biotreatment apparatus alone, and the effluent of the anaerobic biotreatment was introduced into the aerobic biotreatment apparatus along with the second wastewater stream, the test results indicated compatibility of the first wastewater stream comprising MBA dehydration water with both anaerobic and aerobic biological treatment. Signs of instability and inhibition were not observed up to volumetric loading rate (VLR) of 12-13 g COD/liter-day, in relation with an electrical conductivity inside the reactor of 12 mS/cm. When the salt level was maintained at a maximum of 10mS/cm, a VLR of 10 g COD/liter-day could be achieved, in combination with efficient and stable breakdown of the organic contamination, resulting in a COD removal efficiency of at least 98%. The accumulation of volatile fatty acids (VFA) could be countered by temporarily lowering the VLR. VLR was limited to avoid problems associated with intensive biogas production, such as a turbulent sludge blanket, a completely mixed system, and sludge washout, and an adapted reactor could be utilized to enable utilization of a higher VLR.

Considerable pH adjustment with alkali up to 150 meq/d, resulted in a buildup of temporary hardness (bicarbonate and carbonate) in the reactor liquid, and the difference between the electrical conductivity of the influent and effluent of the anaerobic biotreatment apparatus increased to about 10 mS/cm. Thus, despite a virtual absence of salt in the first wastewater stream comprising MBA dehydration water, the successful anaerobic treatment of the first wastewater stream involved the production of a considerable amount of salt, which would result in no harm to process efficiency if taken into account.

Aerobic post-treatment of the anaerobic effluent resulted in a further breakdown of the residual COD, as another 90% of the COD was removed, on average. This resulted in a final COD level close to the target effluent COD of less than 100 mg/liter. Possible effluent polishing options to reduce the COD further, such as sand filtration and/or activated carbon filtration, systematic dosage of powdered activated carbon (e.g., on the order of about 0.5 to 50 kg/day) into the anaerobic reactor, and/or UV treatment or the like could be utilized to meet the target effluent COD level and other effluent requirements.

### Anaerobic Biotreatment of Combined First and Second Wastewater Streams (comparative test)

Introducing the caustic wash purge water to the MBA dehydration water via combination of the first and second wastewater streams prior to introduction into the anaerobic biotreatment reactor resulted in a reduced process efficiency of the anaerobic biotreatment step. The efficiency deteriorated when the dilution rate of the combined streams was reduced, indicating that the negative effect was not completely due to the salt content of the second wastewater stream. The electrical conductivity (EC) did not reach a level considered extreme in the period of loss of efficiency. Indeed, better efficiency was observed during the first half of the test period, during which the EC was artificially increased with sodium chloride, and the EC level was lower than the EC level in the anaerobic pretreatment of the first wastewater comprising MBA dehydration water alone, described hereinabove. The caustic wash purge water of the second wastewater stream may contain components toxic/harmful to the methanogenic activity at higher concentration. Without limitation to theory, potential inhibitors in the second wastewater stream may be styrene monomer, styrene monomer polymerization inhibitors and/or phenol or its phenolic derivatives that may be present as byproducts from a POSM plant. As other experiments confirmed that a caustic wash purge wastewater from caustic wash of an epoxide reaction mixture was also found to contain components harmful to methanogenic bacteria, phenolic compounds and/or caustic salts may be responsible for the reduced efficiency seen when the second wastewater was introduced into the anaerobic biotreatment reactor along with the first wastewater stream comprising MBA dehydration water.

Successful anaerobic biotreatment of the combined first and second wastewater streams was attained at a higher VLR of 7 g COD/liter-day via dilution of the influent by a factor of about 2-3, or via undiluted treatment at a lower VLR of less than 5 g COD/liter-day.

The efficiency of the aerobic post-treatment of the effluent of the anaerobic biotreatment reactor produced when combined first and second wastewater streams were introduced into the anaerobic biotreatment reactor was not affected by the inclusion of the second wastewater stream in the influent to the anaerobic bioreactor. The occurrence of nitrifying activity confirmed that a normal microbial activity developed. The COD removal percentage for the combined first and second wastewater streams was at similar level as that obtained via anaerobic treatment of the first wastewater stream comprising MBA dehydration water alone, as described above. This similar COD removal percentage was due to the fact that the anaerobic effluent for the combined first and second wastewater stream treatment contained a higher COD, due to a less complete breakdown of the COD in the anaerobic reactor.

To further reduce the effluent COD level, a tertiary treatment comprising, for example, a combination of sand filtration, activated carbon filtration, and/or UV-treatment could be utilized.

### Example 2: Aerobic Biotreatment of Combined First and Second Wastewater Streams (comparative test)

Rather than the above-described anaerobic biotreatment of combined first and second wastewater streams, aerobic biotreatment of combined first and second wastewater streams is feasible. Although not economically optimal, such may be a temporary solution, for example, in the case of bio-toxic feed stream(s) and/or full surge tanks. Aerobic treatment may also be the technology of choice, for example in applications in which a high biotreatment reliability and/or availability requirement is the driving force.

## Claims

1. A method for treating wastewaters from a process of co-production of propylene oxide and styrene monomer (POSM process), which involves the oxidation of ethylbenzene to form ethyl benzene hydroperoxide, the catalytic reaction of the hydroperoxide with propylene to form propylene oxide and methylbenzyl alcohol and the dehydration of the methylbenzyl alcohol to produce styrene monomer, whereby various wastewaters are generated including caustic wash wastewater and methylbenzyl alcohol dehydration wastewater, the method comprising:
- producing, via an incinerator/boiler combination (200A), a flue gas and steam from an incinerator feed comprising caustic wash wastewater (W3) from the POSM process;
- anaerobically biotreating in a anaerobic biotreatment apparatus (300A) an anaerobic biotreatment feed comprising methylbenzyl alcohol dehydration wastewater (W1) from the POSM process so as to produce an anaerobically biotreated product (PW1), and
- aerobically biotreating in an aerobic biotreatment apparatus (300B) an aerobic biotreatment feed comprising caustic wash wastewater (W2) from the POSM process and the anaerobically biotreated product (PW1), thereby producing the treated water (PW2).

2. The method of claim 1 further comprising feeding fuel to the incinerator/boiler combination.

3. The method of claim 1 or 2, wherein the incinerator is operated via dry incineration technology with salts blowdown, and produces a salt product.

4. The method of claim 3, wherein the salt product is a non-toxic, stable, and fully oxidized stream that can be disposed of within required specification or reused.

5. The method of any one of claims 1-4, wherein the anaerobic biotreatment apparatus (300A) comprises granulated anaerobic biomass (GBA) that is separated out of the anaerobically biotreated product (PW1) for recycle into biodegradable, anaerobic biotreatment feed to the anaerobic bioreactor 300A under conditions favorable for anaerobic organics conversion.

6. The method of any one of claims 1-5 further comprising introducing the treated water (PW2) into a downstream aerobic biotreatment plant (300C) and extracting therefrom a treated product water (PW3).

7. The method of any one of claims 1-6, wherein the aerobic biotreatment apparatus (300B) comprises a moving bed bioreactor, an activated sludge unit or a combination thereof.

## Patentansprüche

1. Verfahren zur Behandlung von Abwässern aus einem Prozess zur Coproduktion von Propylenoxid und Styrolmonomer (POSM-Prozess), der die Oxidation von Ethylbenzol zur Bildung von Ethylbenzolhydroperoxid, die katalytische Reaktion des Hydroperoxids mit Propylen, um Propylenoxid und Methylbenzylalkohol zu bilden, und die Dehydratisierung des Methylbenzylalkohols beinhaltet, um Styrolmonomer zu produzieren, wodurch verschiedene Abwässer erzeugt werden, einschließlich Abwasser aus der Alkaliwäsche und Abwasser aus der Dehydratisierung von Methylbenzylalkohol, wobei das Verfahren umfasst:
- Produzieren von Rauchgas und Wasserdampf mittels einer Kombination (200A) aus Verbrennungsanlage und Boiler aus einem Einsatzmaterial der Verbrennungsanlage, welches Abwasser (W3) der Alkaliwäsche aus dem POSM-Prozess umfasst;
- anaerobes Biobehandeln eines anaeroben Biobehandlungseinsatzmaterials, das Abwasser (W1) aus der Dehydratisierung von Methylbenzylalkohol aus dem POSM-Prozess umfasst, in einem Apparat (300A) zur anaeroben Biobehandlung, um so ein anaerob biobehandeltes Produkt (PW1) zu produzieren, und
- aerobes Biobehandeln eines aeroben Biobehandlungseinsatzmaterials, das Abwasser (W2) aus der Alkaliwäsche aus dem POSM-Prozess und das anaerob biobehandelte Produkt (PW1) umfasst, in einem Apparat (300B) zur aeroben Biobehandlung, wodurch das behandelte Wasser (PW2) produziert wird.

2. Verfahren nach Anspruch 1, des Weiteren umfassend Einspeisen von Brennstoff in die Kombination aus Verbrennungsanlage und Boiler.

3. Verfahren nach Anspruch 1 oder 2, wobei die Verbrennungsanlage mittels Trockenverbrennungstechnologie mit Abschlämmung von Salzen betrieben wird und ein Salzprodukt produziert.

4. Verfahren nach Anspruch 3, wobei das Salzprodukt ein nicht-toxischer, stabiler und vollständig oxidierter Strom ist, der gemäß erforderlicher Spezifikation entsorgt oder wiederverwendet werden kann.

5. Verfahren nach einem der Ansprüche 1 bis 4, wobei der Apparat (300A) zur anaeroben Biobehandlung granulierte anaerobe Biomasse (GBA) umfasst, die von dem anaerob biobehandelten Produkt (PW1) abgetrennt wird, um unter Bedingungen, die für die anaerobe Konvertierung organischer Materialien günstig sind, in bioabbaubares anaerobes Biobehandlungseinsatzmaterial in den anaeroben Bioreaktor (300A) recycelt zu werden.

6. Verfahren nach einem der Ansprüche 1 bis 5, des Weiteren umfassend Einbringen des behandelten Wassers (PW2) in eine nachgeordnete aerobe Biobehandlungsanlage (300C) und Extrahieren eines behandelten Produktwassers (PW3) daraus.

7. Verfahren nach einem der Ansprüche 1 bis 6, wobei der aerobe Biobehandlungsapparat (300B) einen Bewegtbett-Bioreaktor, eine Belebtschlammeinheit oder eine Kombination davon umfasst.

## Revendications

1. Procédé de traitement d'eaux usées provenant d'un procédé de coproduction d'oxyde de propylène et de monomère de styrène (procédé POSM), qui implique l'oxydation d'éthylbenzène pour former de l'hydroperoxyde d'éthylbenzène, la réaction catalytique de l'hydroperoxyde avec du propylène pour former de l'oxyde de propylène et de l'alcool méthylbenzylique et la déshydratation de l'alcool méthylbenzylique pour produire un monomère de styrène, moyennant quoi diverses eaux usées sont générées comprenant des eaux usées de lavage caustique et des eaux usées de déshydratation d'alcool méthylbenzylique, le procédé comprenant :
- la production, par l'intermédiaire d'une combinaison incinérateur/chaudière (200A), d'un gaz de combustion et de vapeur à partir d'une charge d'incinérateur comprenant des eaux usées de lavage caustique (W3) provenant du procédé POSM ;
- le biotraitement anaérobie dans un appareil de biotraitement anaérobie (300A) d'une charge de biotraitement anaérobie comprenant des eaux usées de déshydratation d'alcool méthylbenzylique (W1) provenant du procédé POSM de façon à produire un produit biotraité anaérobie (PW1) et
- le biotraitement aérobie dans un appareil de biotraitement aérobie (300B) d'une charge de biotraitement aérobie comprenant les eaux usées de lavage caustique (W2) provenant du procédé POSM et le produit biotraité anaérobie (PW1), produisant ainsi l'eau traitée (PW2).

2. Procédé selon la revendication 1, comprenant en outre l'alimentation en combustible de la combinaison incinérateur/chaudière.

3. Procédé selon la revendication 1 ou 2, l'incinérateur fonctionnant par l'intermédiaire d'une technologie d'incinération à sec avec purge des sels et produisant un produit salin.

4. Procédé selon la revendication 3, le produit salin étant un flux non toxique, stable et complètement oxydé qui peut être rejeté dans les spécifications requises ou réutilisé.

5. Procédé selon l'une quelconque des revendications 1 à 4, l'appareil de biotraitement anaérobie (300A) comprenant une biomasse anaérobie granulée (GBA) qui est séparée du produit biotraité anaérobie (PW1) pour être recyclée en charge de biotraitement anaérobie biodégradable dans le bioréacteur anaérobie 300A dans des conditions favorables pour la conversion anaérobie de matières organiques.

6. Procédé selon l'une quelconque des revendications 1 à 5, comprenant en outre l'introduction de l'eau traitée (PW2) dans une installation de biotraitement aérobie en aval (300C) et l'extraction à partir de celle-ci d'une eau de produit traitée (PW3).

7. Procédé selon l'une quelconque des revendications 1 à 6, l'appareil de biotraitement aérobie (300B) comprenant un bioréacteur à lit mobile, une unité de boue activée ou une combinaison de ceux-ci.
